Europäisches Patentamt

European Patent Office

Office européen des brevets

(19)

(11) Publication number: **0 384 575**
**A1**

(12) # EUROPEAN PATENT APPLICATION

(21) Application number: **90300675.7**

(22) Date of filing: **23.01.90**

(51) Int. Cl.⁵: **G02B 21/22, G02B 27/22**

(30) Priority: **24.01.89 GB 8901477**

(43) Date of publication of application:
**29.08.90 Bulletin 90/35**

(84) Designated Contracting States:
**AT BE CH DE DK ES FR GB IT LI NL SE**

(71) Applicant: **VISION ENGINEERING LIMITED**
**Send Road**
**Send Woking Surrey GU23 7ER(GB)**

(72) Inventor: **Freeman, Robin John**
**Aquarius, The Fairway, Bagshot Road**
**Worplesdon, Guilford, Surrey(GB)**

(74) Representative: **Loughrey, Richard Vivian**
**Patrick et al**
**HUGHES CLARK & CO 63 Lincoln's Inn Fields**
**London WC2A 3JU(GB)**

(54) **Optical instrument.**

(57) An optical instrument such as a stereo microscope comprises a single optical system (17) including an object lens (1) in which the optical system (17) is rotated continuously about an axis (4) to form stereo pairs of images (D) of corresponding pairs of views of an object (A). The microscope may utilise an optically directional element (C) as a screen for the viewing of the stereo image pairs.

FIG.1.

EP 0 384 575 A1

## OPTICAL INSTRUMENT

This invention relates to optical instruments and in particular to optical instruments such as microscopes for providing a stereo image of an object.

Stereo microscopes are known in which two optical systems form two separate images of the object viewed from angularly displaced directions and these images are viewed individually by the two eyes respectively of a viewer. Accordingly the physical space in which the object lenses are located is determined by the angular displacement of the directions of viewing of the object by the two optical systems. In order to achieve high magnification, the object lenses of the two optical systems need to be closely adjacent to the object being viewed and as a result the physical space to accommodate the two object lenses is very confined. If lenses of small numerical aperture are used in order to locate them within the confined space, the light transmission of the optical systems is reduced to an unacceptable level. In order to achieve an acceptable level of light transmission, object lenses of larger numerical aperture must be used and in known constructions of stereo microscope this has been restricted by the mechanical impossibility of increasing the object lens diameter and maintaining an acceptable stereo angle, thereby limiting both resolution and magnification.

According to one aspect of the present invention an optical instrument includes an optical system operative to produce an image of an object viewed at an angle to an axis and means to rotate the optical system continuously about said axis to produce images diametrically opposed relative to said axis.

According to another aspect of the invention an optical instrument includes an axis of rotation; and an optical system rotatable about said axis of rotation; said optical system comprising an object lens having an optical axis extending at an acute angle to said axis of rotation; and optical means operative to form an image of an object viewed in a direction aligned with said optical axis by said object lens; and means to rotate continuously said optical system about said axis of rotation to form a pair of images diametrically opposed relative to said axis of rotation of a corresponding pair of views of said object diametrically opposed relative to said axis of rotation.

An embodiment of the invention will now be described with reference to the drawings in which:-

Figure 1 illustrates diagrammatically the optical system of a stereo microscope in accordance with the invention,

Figure 2 is similar to Figure 1 after rotation of the optical system through 180°,

Figure 3 illustrates the provision of a substage light source for the microscope,

Figure 4 illustrates the provision of a light source for coaxial surface illumination of an object,

Figure 5 is similar to Figure 1 and illustrates the stereo microscope incorporating a reflective screen, and

Figure 6 illustrates schematically a rotational drive arrangement.

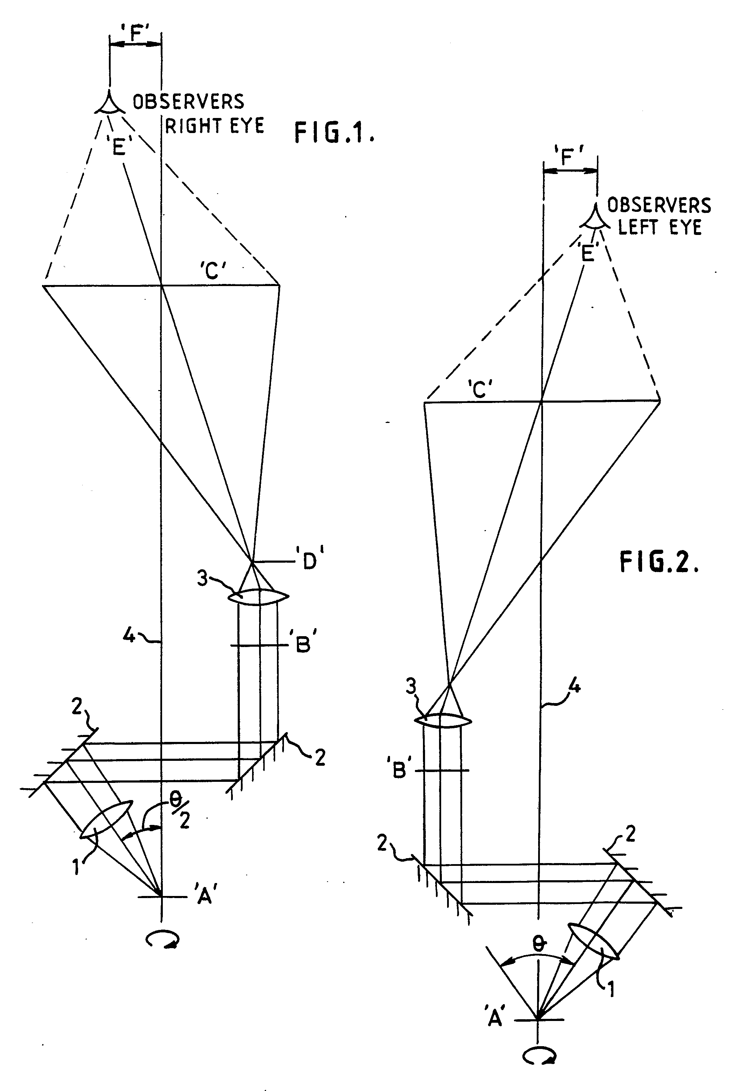

Referring firstly to Figure 1, an optical system of a microscope for producing a magnified image of an object located in plane 'A' comprises an object lens 1, a pair of plane reflecting surfaces 2, a further lens 3 and a screen in plane 'C'. The object lens produces an image in plane 'B' of the object in plane 'A' and the further lens 3 magnifies the image in plane 'B' and focuses it onto the surface of the screen in plane 'C' The screen in plane 'C' is an optically directional element producing an enlargement of the pupil 'D' at the position 'E' of an observer's right eye. A screen of this type is utilised in optical instruments known by the name 'Dynascope' manufactured and marketed by Vision Engineering Limited and details of the construction of such a screen may be obtained from the disclosure of UK Patent No. 1275917 and US Patent 4099831. As disclosed therein, the screen is rotated continuously, at a speed above the persistence of vision, about an axis.

The optical system shown in Figure 1 is rotatable about a rotational axis 4. The optical axis of the object lens 1 extends at an angle $\theta/2$ to the rotational axis 4 and the reflecting surfaces 2 are angled such that the principle light rays directed to the further lens 3 are substantially parallel to the rotational axis 4. The optical system is arranged such that the distance 'F' of the observer's eye at 'E' is half the standard inter-pupillary distance. Thus the observer's right eye sees an image of the object at plane 'A' viewed from the right hand side of the object relative to the observer. When the optical system is rotated through 180° about the rotational axis 4 while the observer and the object remain stationary, the optical system will be in the position illustrated in Figure 2 and the observer's left eye sees an image of the object in plane 'A' viewed from the left hand side of the object relative to the observer. Thus the left and right eyes of the observer see magnified images of the object viewed respectively from the left and right hand sides of the object, the angles of view being at an angle $\theta$ relative to one another. The optical system is rotated continuously about the rotational axis 4 at a speed sufficiently high to ensure persistence of vision of the image and hence the observer will perceive a full stereo image of the object.

It will be appreciated that only one optical system, and hence only one object lens, is required to produce a stereo image for an observer. As a result the restrictions on lens numerical aperture and the magnification obtainable, arising from the need to locate two object lenses within a space determined by the stereo angle between the axes of the object lenses in known stereo microscopes, are overcome. Accordingly the optical system described herein permits higher magnification to be obtained while using a lens of sufficient numerical aperture to provide an acceptable level of light transmission and resolution.

While the screen in plane 'C' is shown in Figures 1 and 2 as being transmissive, the optical system may be configured to utilise a reflective screen, if desired, as illustrated in Figure 5. When a reflective screen is utilised the viewing position of the observer's eyes is offset from the plane of the Figure 5 so that the viewing position does not lie in the region through which light from the lens 3 passes to the screen in plane 'C'. This may be effected by tilting the plane 'C' of the screen relative to the optical system such that the screen extends non-perpendicularly to the plane of Figure 5. The viewing position may be located at a convenient location relative to the optical system by the provision of appropriate reflective and/or refractive elements to direct light emerging after transmission or reflection from the screen. Such reflection and/or refraction of the light is disclosed in the prior published patent specification referred to hereinbefore.

While the use of an optically directional screen as utilised in a Dynascope instrument is the preferred method of viewing the image, it is envisaged that other methods of viewing the image may be utilised. Instead of reflective surfaces 2, the light transmission path may include refractive elements to direct the rays from the lens 1 to the lens 3.

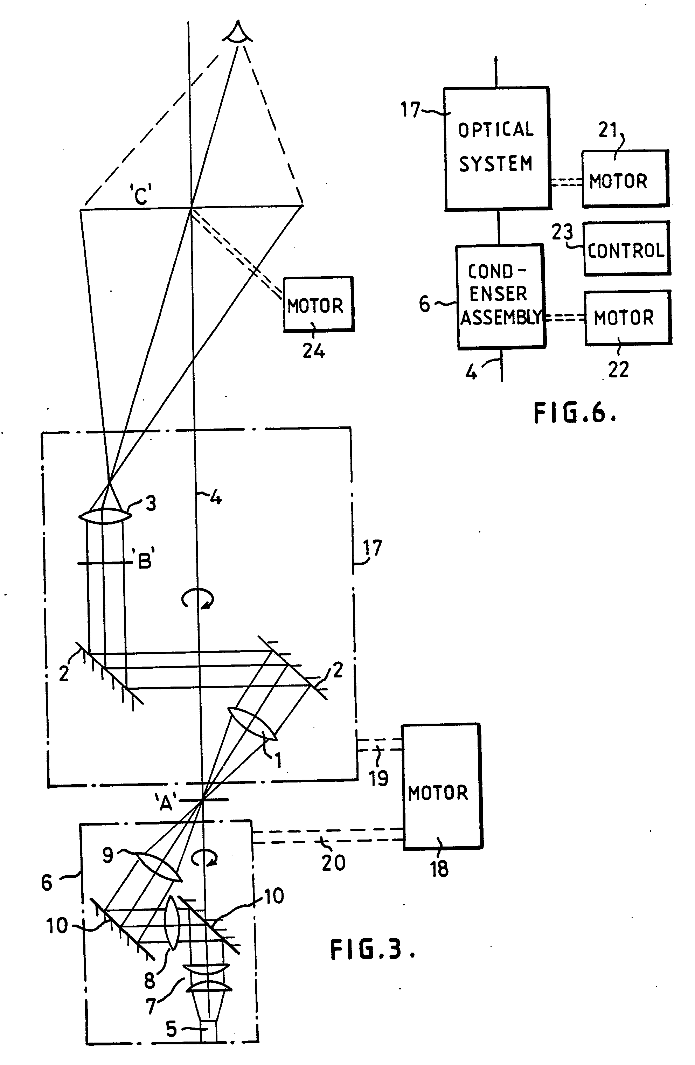

The object in plane 'A' may be lighted by a substage light source as shown in Figure 3. A source of illumination 5 is positioned coaxially of the rotational axis 4 below the plane 'A' and a condenser assembly 6 including lenses 7,8,9 and a pair of mirrors 10 directs the light from the source 5 through the object in plane 'A' toward the lens 1. The optical axis of the condenser assembly is aligned with the optical axis of the lens 1. The condenser assembly 6, including the mirrors 10, is rotated in synchronism with the rotation of the optical system of the microscope so as to maintain alignment of the optical axes of the illumination source and the microscope optical viewing system. It will be appreciated that it is not necessary to rotate the light source 5 and the lens 7, however if desired the light source and the lens 7 may be located in and be rotated with the rotating condenser assembly 6. An assembly 17, comprising the optical system of the microscope, and the condenser assembly 6 may be rotated by a single motor 18 through mechanical couplings 19, 20 as shown in Figure 3 or if desired may be rotated by separate motors 21, 22 which are maintained in synchronism by electronic control circuits 23. The optically directional screen in plane 'C' is rotated continuously by a motor 24.

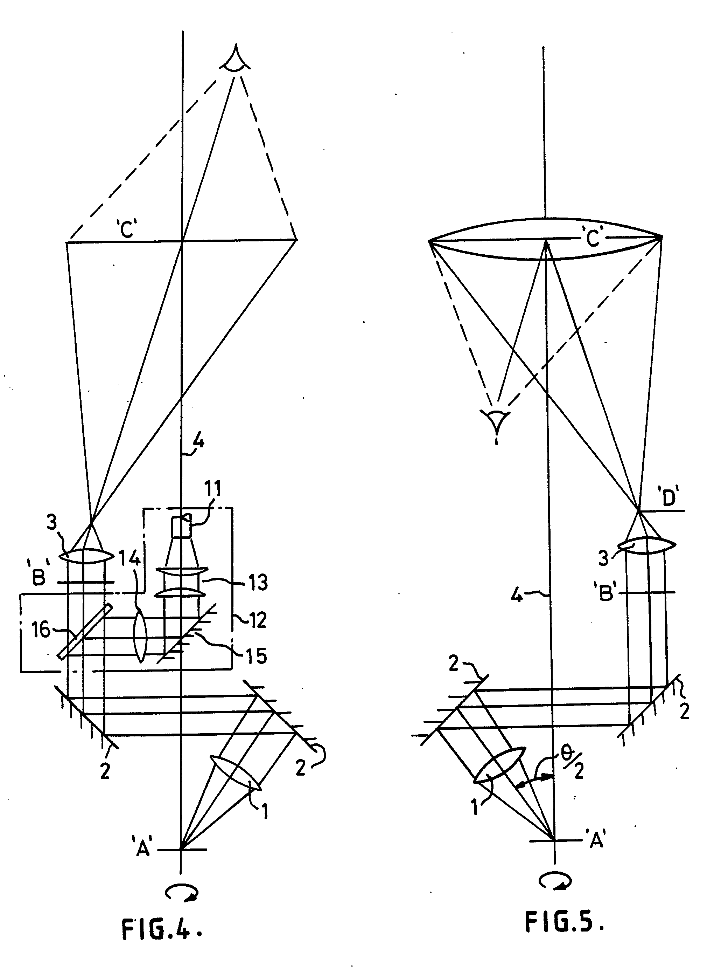

If surface illumination of the object in plane 'A' is required a light source may be located within the optical system of the microscope as shown in Figure 4. Light from a source 11 is directed by a condenser assembly 12 comprising lenses 13, 14, a mirror 15 and a partially reflecting surface 16 along the light path of the optical system of the microscope toward the object in plane 'A'. The partially reflecting surface 16 reflects light from the source 11 but transmits light received from the object in plane 'A' toward the lens 3. The lens 14, mirror 15 and partially reflecting surface 16 rotate with the optical system of the microscope.

It will be understood that since the optical system, when continuously rotated about the rotational axis 4, is symmetrical about the rotational axis 4, the eyes of the observer may be located in any desired diametrically opposite position relative to the axis and hence stereoscopic image pairs of the object viewed from any desired rotational position about the axis 4 may be observed by an observer.

While the embodiment described hereinbefore comprises a stereo microscope, it will be understood that the principle of the invention may be utilised in optical instruments other than microscopes where more than one image of an object is required to be produced.

## Claims

1. An optical instrument including an optical system (17) operative to produce an image (D) of an object (A) viewed at an angle to an axis (4) characterised in that the optical system (17) is continuously rotated about the axis (4) to produce images diametrically opposed relative to said axis.

2. An optical instrument as claimed in claim 1 further characterised in that the optical system (17) includes an object lens (1) having an optical axis extending angularly to the axis (4).

3. An optical instrument as claimed in claim 1 or 2 further characterised by a screen (C) and a further lens (3) operative to produce the image (D) of the object on said screen (C).

4. An optical instrument as claimed in claim 4 further characterised in that the screen (C) is an optically directional element.

5. An optical instrument as claimed in claim 4 further characterised in that the screen (C) is transmissive.

6. An optical instrument as claimed in claim 4 further characterised in that the screen (C) is reflective.

7. An optical instrument as claimed in claim 4, 5 or 6 further characterised by first drive means (24) to rotate the screen (C) about an axis thereof.

8. An optical instrument as claimed in any preceding claim further characterised by second drive means (18,19; 21) operable to continuously rotate the optical system (17) about the axis (4).

9. An optical instrument as claimed in any one of claims 2 to 8 further characterised by means (6) to illuminate an object (A) to be viewed by transmission of light therethrough.

10. An optical instrument as claimed in claim 9 further characterised by a light source (5) and light directing means (7,8,9,10) to direct light from the source (5) through an object (A) to be viewed toward the object lens (1) in a direction aligned with the axis of the object lens, and third drive means (18,20; 22) to rotate the light directing means (6) in synchronism with rotation of the optical system (17).

11. An optical instrument as claimed in any one of claims 2 to 8 further characterised by means (12) to illuminate the surface of an object (A) to be viewed.

12. An optical instrument as claimed in claim 11 further characterised by a source of light (11) and means (13,14,15,16) to direct light from the source (11) through the object lens (1) in alignment with the axis thereof toward an object (A) to be viewed, the light directing means (13,14,15,16) being rotated in synchronism with rotation of the optical system (17).

13. An optical instrument as claimed in claim 10 further characterised in that the first and third drive means include a motor (18) common to both the first and third drive means.

14. A stereo microscope comprising an optical instrument as claimed in any preceding claim.

15. An optical instrument including an optical system (17) comprising an object lens (1) having an optical axis and optical means (2,3) operative to form an image (D) of an object (A) viewed in a direction aligned with said optical axis by said object lens (1); characterised by means (18,19; 21) to continuously rotate the optical system (17) about an axis (4) of rotation extending at an acute angle to the optical axis of the object lens (1) to form a pair of images diametrically opposed relative to said axis of rotation of a corresponding pair of views of said object diametrically opposed relative to said axis of rotation.

16. An optical instrument as claimed in claim 15 further characterised in that the pair of images formed by the optical system (17) have an angular orientation relative to the axis of rotation (4) such that when the pair of images is viewed by an observer (E) the angular orientation of the pair of images corresponds to an angular orientation of the corresponding pair of views.

17. An optical instrument as claimed in claim 15 further characterised in that the optical means includes a further lens (3) arranged to form an image (D) of a view of the object (A) viewed by the object lens (1) said lens (3) being located angularly relative to the axis of rotation (4) diametrically opposite the object lens (1); and optical elements (2) effective to direct light from the object lens (1) to said further lens (3).

18. An optical instrument as claimed in claim 17 further characterised in that the optical means includes first and second optical elements (2), said first element being effective to direct light from the object lens (1) to the second element (2) and said second element (2) being effective to direct light in a direction substantially parallel to the axis of rotation (4) to the further lens (3).

FIG.1.

FIG.2.

FIG.6.

FIG.3.

FIG.4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 530 928 (CANON)<br>* Claims; figures 1,2,12,13 * | 1,2,8 | G 02 B 21/22<br>G 02 B 27/22 |
| A | | 9 | |
| X | PATENT ABSTRACTS OF JAPAN, vol. 10, no. 225 (P-484)[2281], 6th August 1986, page 86 P 484; & JP-A-61 61 117 (CANON INC.) 28-03-1986<br>* Abstract * | 1 | |
| A | CH-A- 565 379 (WILD)<br>* Column 2, lines 1-9; figure 1 * | 1,2 | |
| A,D | FR-A-2 025 931 (VISION ENGINEERING)<br>* Claims; figures * | 3,4,6,7 | |
| A | US-A-4 099 831 (R.J. FREEMAN)<br>* Claims; figure 1 * | 9,10,11,12 | |
| A | DE-A-3 229 516 (G. STÜCKLER)<br>* Claims; figures * | 1 | TECHNICAL FIELDS SEARCHED (Int. Cl.5)<br><br>G 02 B |

The present search report has been drawn up for all claims

| Place of search | Date of completion of the search | Examiner |
|---|---|---|
| THE HAGUE | 15-05-1990 | PFAHLER R. |

EPO FORM 1503 03.82 (P0401)